# EUROPÄISCHE PATENTANMELDUNG

(11) **EP 4 556 415 A1**
(43) Veröffentlichungstag der Anmeldung: **21.05.2025**
(21) Anmeldenummer: 24206983.9
(22) Anmeldetag: 16.10.2024
(51) Int. Cl.: B65G 47/90, B25J 15/02, B66C 1/44

(54) **GREIFERKOPF UND VERFAHREN ZUM ERFASSEN UND MANIPULIEREN VON STÜCKGÜTERN**

(30) Priorität: 14.11.2023 DE 102023131679
(71) Anmelder: KRONES Aktiengesellschaft, 93073 Neutraubling (DE)
(72) Erfinder: KIRZINGER, Johannes, 93073 Neutraubling (DE); OBERHOLZNER, Dominik, 93073 Neutraubling (DE)
(74) Vertreter: Benninger Patentanwaltskanzlei

(57) **Zusammenfassung**

Es ist ein Greiferkopf (1) zum Erfassen von Stückgütern (3) offenbart. Der Greiferkopf (1) umfasst eine erste Greiferleiste (7) und eine zweite Greiferleiste (8), die eine Zustellbewegung zur klemmenden Entgegennahme mindestens eines Stückgutes (3) ausführen können und an einer Greiferbasis (5) des Greiferkopfes (1) befestigt sind. Weiter umfasst der Greiferkopf (1) wenigstens eine Stützleiste (9) für Stückgüter (1), die sich zwischen der ersten Greiferleiste (7) und der zweiten Greiferleiste (8) befindet und an der Greiferbasis (5) gehalten wird. Es ist vorgesehen, dass der Greiferkopf (1) wenigstens ein Gelenk (12) umfasst, über das die wenigstens eine Stützleiste (9) zumindest bereichsweise in Richtung der Greiferbasis (5) schwenkbar ist.

## Beschreibung

Die vorliegende Erfindung betrifft einen Greiferkopf zum Erfassen von Stückgütern, ein Dreh- und Verteilsystem für Stückgüter mit einem solchen Greiferkopf und ein Verfahren zum Erfassen und Manipulieren von Stückgütern.

Um Stückgüter im Bereich der Pack- und Palettiertechnik in eine relative Anordnung bringen zu können, die sich zum Bilden einer palettierfähigen Lage eignet, sind aus dem Stand der Technik bereits Greifer bekannt, welche über mehrere zum klemmenden Erfassen von Stückgütern vorgesehene Leisten verfügen. Diese Leisten bzw. Klemmleisten können bei bereits bekannten Greifern eine Zustellbewegung ausführen, wodurch Stückgüter zwischen den Leisten kraftbeaufschlagt gehalten werden und der Greifer sodann die gehaltenen Stückgüter drehen und/oder gegenüber weiteren Stückgütern verschieben kann. Nach einem Drehen und/oder Verschieben können die Leisten geöffnet werden bzw. ihren relativen Abstand zueinander vergrößern, wodurch die bis dahin klemmend gehaltenen Stückgüter wieder freigegeben werden.

Bei den Stückgütern kann es sich beispielsweise um Gebinde mit mehreren Getränkebehältern handeln, so dass ein entsprechender Greifer solche Gebinde entgegennehmen und hierauf bedarfsweise drehen bzw. verschieben kann. Bekannt sind beispielsweise Gebinde, bei welchen mehrere Getränkebehälter mittels einer Umreifung und/oder einer Banderole zusammengehalten werden. Darüber hinaus existieren Gebinde, bei welchen Artikel über ein sogenanntes Tray zusammengehalten werden, auf welchem mehrere Getränkebehälter aufstehen und welches Tray seitliche Laschen besitzt, die in eine aufrechte Orientierung überführt wurden. Auch sind seit einiger Zeit Gebinde bekannt, bei welchen Getränkebehälter über einen flächigen Verpackungszuschnitt zusammengehalten werden, der in Richtung von oben kommend auf die jeweiligen Getränkebehälter aufgesteckt wurde. Solche in der Praxis als Top-Clips bezeichneten Verpackungszuschnitte können aus Karton und/oder aus Pappe gebildet sein.

Bekannt sind aus dem Stand der Technik bereits Greifer, die ein Gebinde oder mehrere Gebinde, die hierbei hintereinander in den Arbeitsbereich des Greifers bewegt wurden, klemmend entgegennehmen können. Darüber hinaus sind Greifer bekannt, die Gebinde, die nebeneinander den Arbeitsbereich des Greifers erreichen, klemmend entgegennehmen können. Bei solchen Ausführungsformen werden die Gebinde, welche nebeneinander angeordnet sind, bei einer Zustellbewegung der Greiferleisten zusammengeführt. Die Praxis hat gezeigt, dass eine nachfolgende Manipulation von Gebinden häufig dazu führt, dass sich diese klemmend über den Greifer gehaltenen Gebinde verschieben, was insbesondere bei einer Drehung der Gebinde über den Greifer der Fall sein kann.

Um solche Probleme zu vermeiden, sind Greifer bekannt, die über mindestens ein Trenn- oder Stützblech verfügen, das zwischen den Greiferleisten angeordnet ist. Werden mehrere nebeneinander angeordnete Gebinde über einen Greifer erfasst, so tritt ein jeweiliges Gebinde mit dem Trenn- oder Stützblech in Oberflächenkontakt, wodurch verhindert werden kann, dass sich Gebinde bei einer nachfolgenden Manipulation ungewollt vom Greifer lösen. Ein solcher Greifer ist aus der EP 4 067 271 A1 bekannt.

Somit ist es der Fall, dass mindestens ein entsprechendes Trenn- oder Stützblech in Abhängigkeit der jeweiligen durchzuführenden Manipulation entweder notwendig bzw. sinnvoll ist oder auch vollständig entfallen kann, sofern die jeweilige Manipulation kein solches Trenn- oder Stützblech erfordert. Sofern ein Greifer für unterschiedliche Manipulationsaufgaben verwendet werden soll, muss der Greifer somit an die jeweilige Manipulationsaufgabe angepasst werden, wozu es erforderlich sein kann, mindestens ein Trenn- oder Stützblech am Greifer anzuordnen oder mindestens ein Trenn- oder Stützblech vom Greifer zu entfernen.

Wünschenswert wären Möglichkeiten, mit denen die Umrüstzeiten für einen Greifer verkürzt werden können oder entsprechende Umrüstarbeiten am Greifer ggf. sogar vollständig entfallen können. Auch sind Greifer wünschenswert, die gegenüber aus dem Stand der Technik bekannten Greifern eine höhere Flexibilität bei der Entgegennahme von Stückgütern besitzen.

Auch ist es der Fall, dass der Greifer innerhalb eines Arbeitsprogrammes nicht angepasst bzw. umgerüstet werden kann, da dies einen manuellen Bedienereingriff erfordern würde. Sofern demnach Stückgüter innerhalb des jeweiligen Arbeitsprogrammes gegriffen werden sollen, die über eine einbahnige Zuführung bereitgestellt werden und unmittelbar hierauf folgend Stückgüter gegriffen werden sollen, die über eine zweibahnige Zuführung bereitgestellt werden, können aus dem Stand der Technik bekannte Greifer diese Arbeitsaufgabe nicht erfüllen. Ein solches Greifern kann jedoch sinnvoll oder sogar notwendig sein, um Stückgüter durch Manipulation in eine Anordnung überführen zu können, die auf eine aus den Stückgütern zu bildende palettierfähige Lage abgestimmt ist. Es wären Greifer wünschenswert, welche diese Aufgabe erfüllen können.

Eine Aufgabe der Erfindung kann aus diesem Grunde darin gesehen werden, eine Möglichkeit bereitzustellen, mit der die Flexibilität bei unterschiedlichen Manipulationsaufgaben weiter erhöht werden kann. Weiter kann eine Aufgabe der Erfindung darin gesehen werden, eine Möglichkeit bereitzustellen, mit der Umrüstzeiten für einen Greifer bei einem Wechsel zwischen unterschiedlichen Manipulationsaufgaben wenigstens verkürzt werden können oder sogar vollständig entfallen können.

Die obigen Aufgaben werden durch die Gegenstände gelöst, welche die Merkmale in den unabhängigen Ansprüchen umfassen. Weitere vorteilhafte Ausgestaltungen werden durch die Unteransprüche beschrieben.

Die Erfindung betrifft einen Greiferkopf zum Erfassen von Stückgütern. Der Greiferkopf weist eine erste Greiferleiste und eine zweite Greiferleiste auf, die eine Zustellbewegung zur klemmenden Entgegennahme mindestens eines Stückgutes ausführen können und an einer Greiferbasis des Greiferkopfes befestigt sind.

Hierbei kann es sein, dass die erste Greiferleiste und die zweite Greiferleiste im Rahmen der Zustellbewegung jeweils eine lineare Bewegung ausführen bzw. dass die erste Greiferleiste und die zweite Greiferleiste im Rahmen der Zustellbewegung jeweils in linearer Richtung bewegt werden. Alternativ hierzu kann es sein, dass die erste Greiferleiste und die zweite Greiferleiste im Rahmen der Zustellbewegung jeweils geschwenkt werden.

Eine für die erste Greiferleiste vorgesehene erste Schwenkachse und eine für die zweite Greiferleiste vorgesehene zweite Schwenkachse können bei solchen Ausführungsformen parallel zueinander orientiert sein. Sofern der Greiferkopf als Bestandteil eines nachfolgend noch beschriebenen Dreh- und Verteilsystems ausgebildet ist, können die Schwenkachsen parallel zur Transportrichtung wenigstens einer Horizontalfördereinrichtung des Dreh- und Verteilsystems verlaufen.

Bei der ersten Greiferleiste und bei der zweiten Greiferleiste kann es sich beispielsweise um eine Greiferbacke, um einen zangenförmigen Greiferarm, um ein Blech oder um eine weitere Greifkonstruktion handeln. Alternativ oder ergänzend hierzu können die erste Greiferleiste und/oder die zweite Greiferleiste jeweils eine Profilierung und/oder jeweils reversibel elastische verformbare Elemente besitzen, die zum Oberflächenkontakt mit dem jeweiligen klemmend entgegenzunehmenden Stückgut vorbereitet sind. Wenn also im Zusammenhang der vorliegenden Beschreibung von Greiferleisten die Rede ist, die Bestandteil des Greiferkopfes sind, insbesondere bewegliche Bestandteile des Greiferkopfes, so kann es sich hierbei in jedem einzelnen erwähnten Fall um Greiferbacken, um zangenförmige Greiferarme, um Bleche oder um andere Greifkostruktionen handeln, die wahlweise mit Profilierungen und/oder mit reversibel elastisch verformbaren Elementen ausgestattet sein können.

Bei solchen Ausführungsformen wird ein Risiko reduziert, dass das jeweilige klemmend entgegenzunehmende mindestens eine Stückgut durch einen Kontakt mit einer Greiferleiste beschädigt wird. Sofern die erste Greiferleiste und/oder die zweite Greiferleiste eine Profilierung aufweisen, wird die Haftreibung zwischen der ersten Greiferleiste und/oder der zweiten Greiferleiste und dem klemmend entgegengenommenen mindestens einen Stückgut erhöht, wodurch ein Risiko reduziert werden kann, dass sich das mindestens eine klemmend über die erste Greiferleiste und die zweite Greiferleiste entgegengenommene mindestens eine Stückgut ungewollt vom Greiferkopf löst.

Das Merkmal der ersten Greiferleiste und der zweiten Greiferleiste ist somit vorliegend breit und umfassend zu verstehen und umfasst jegliche Konstruktionen, die sich zur klemmenden Entgegennahme von Stückgütern eignen, insbesondere durch gegensinniges Gegeneinanderzustellen der Greiferleisten, um zwischen ihnen ein Stückgut oder mehrere Stückgüter klemmend zu erfassen und entgegenzunehmen.

Weiter umfasst der Greiferkopf wenigstens eine Stützleiste für Stückgüter, die sich zwischen der ersten Greiferleiste und der zweiten Greiferleiste befindet und an der Greiferbasis gehalten wird. Es ist vorgesehen, dass der Greiferkopf wenigstens ein Gelenk umfasst, über das die wenigstens eine Stützleiste zumindest bereichsweise in Richtung der Greiferbasis schwenkbar ist. Durch eine Schwenkbewegung kann die Stützleiste in eine Warteposition gelangen, bei der sie nicht mit dem mindestens einen Stückgut in Oberflächenkontakt steht, dass über die erste Greiferleiste und die zweite Greiferleiste klemmend gehalten wird. Durch eine erneute Schwenkbewegung in Gegenrichtung der Greiferbasis kann die wenigstens eine Stützleiste in eine Arbeitsposition gelangen, bei der sie mit benachbarten Stückgütern in Oberflächenkontakt steht, wenn diese benachachbarten Stückgüter über die erste Greiferleiste und über die zweite Greiferleiste klemmend entgegengenommen sind.

Es kann sein, dass die gesamte wenigstens eine Stützleiste über das wenigstens eine Gelenk in Richtung der Greiferbasis schwenkbar ist.

Auch kann es sein, dass die wenigstens eine Stützleiste aus mindestens zwei Abschnitten gebildet ist, die über das wenigstens eine Gelenk drehbar miteinander verbunden sind, so dass ein Abschnitt oder mehrere Abschnitte einer jeweiligen Stützleiste durch eine Drehbewegung in Richtung der Greiferbasis schwenkbar sind. Mindestens ein weiterer Abschnitt kann hierbei in seiner jeweiligen relativen Orientierung gegenüber der Greiferbasis verbleiben.

Weiter kann der Greiferkopf mindestens einen an der Greiferbasis angeordneten Aktuator umfassen, der die wenigstens eine Stützleiste mit einer Stellbewegung betätigen kann, bei der die wenigstens eine Stützleiste zumindest bereichsweise in Richtung der Greiferbasis schwenkt.

Der mindestens eine an der Greiferbasis angeordnete Aktuator kann als Pneumatikzylinder und/oder als Elektromotor ausgebildet sein. Sofern der mindestens eine Aktuator als Pneumatikzylinder ausgebildet ist, kann sein Zylinder mit der Greiferbasis verbunden sein und sein Kolben an der wenigstens einen Stützleiste angeordnet sein. Insbesondere haben sich hierbei Ausführungsformen bewährt, bei denen der mindestens eine Aktuator als Pneumatikzylinder ausgebildet ist, wobei sein Zylinder gelenkig mit der Greiferbasis verbunden ist und sein Kolben gelenkig an der wenigstens einen Stützleiste angeordnet ist.

Es haben sich Ausführungsformen bewährt, bei denen eine jeweilige lineare Schwenkachse des wenigstens einen Gelenkes eine solche Ausrichtung besitzt, bei der die jeweilige lineare Schwenkachse im Wesentlichen horizontal orientiert ist, wenn das jeweilige mindestens eine Stückgut im Rahmen einer jeweiligen Zustellbewegung der ersten Greiferleiste und der zweiten Greiferleiste klemmend entgegengenommen wird.

In diversen Ausführungsformen kann die wenigstens eine Stützleiste über mindestens eine Linearführung an der Greiferbasis gehalten sein.

Weiter kann es sein, dass die wenigstens eine Stützleiste durch die erste Greiferleiste und/oder durch die zweite Greiferleiste mit einer Stellbewegung betätigbar ist, bei der die wenigstens eine Stützleiste zumindest bereichsweise in Richtung der Greiferbasis schwenkt.

Der Greiferkopf kann einen Rastmechanismus umfassen, über den die wenigstens eine Stützleiste in einer Warteposition festsetzbar ist, in welcher Warteposition die wenigstens eine Stützleiste zumindest bereichsweise in Richtung der Greiferbasis geschwenkt ist.

Auch ist denkbar, dass die erste Greiferleiste und/oder die zweite Greiferleiste einen Durchbruch ausbilden, durch den die wenigstens eine Stützleiste hindurchtreten kann, wenn die wenigstens eine Stützleiste zumindest bereichsweise in Richtung der Greiferbasis geschwenkt ist.

Der Greiferkopf kann zum Erfassen von Stückgütern, bei denen es sich um Getränkebehältergebinde handelt, ausgebildet sein.

Weiter betrifft die Erfindung ein Dreh- und Verteilsystem für Stückgüter mit mindestens einem Greiferkopf gemäß mindestens einem Ausführungsbeispiel der vorhergehenden Beschreibung.

Das Dreh- und Verteilsystem kann mindestens einen Industrieroboter umfassen, an dem der mindestens eine Greiferkopf angeordnet ist, wobei es sich bei dem mindestens einen Industrieroboter um einen Portalroboter und/oder um einen Deltakinematik-Roboter handelt.

Weiter kann das Dreh- und Verteilsystem zum Bilden einer Anordnung aus einer Vielzahl an Stückgütern konfiguriert und ausgestattet sein, welche Anordnung auf eine aus der Vielzahl an Stückgütern zu bildende palettierfähige Lage abgestimmt ist.

Bei dem Dreh- und Verteilsystem kann es sein, dass der mindestens eine Greiferkopf einen Rastmechanismus umfasst, über den die wenigstens eine Stützleiste in einer Warteposition festsetzbar ist, in welcher Warteposition die wenigstens eine Stützleiste zumindest bereichsweise in Richtung der Greiferbasis geschwenkt ist. Hierbei hat es sich bewährt, wenn das Dreh- und Verteilsystem einen Anschlag umfasst, der insbesondere als Nocken ausgebildet ist. Der Anschlag bzw. der Nocken kann an einem Gestell des Dreh- und Verteilsystems angeordnet sein.

Der Industrieroboter kann derart konfiguriert und ausgestattet sein, dass der Industrieroboter die wenigstens eine Stützleiste des mindestens einen Greiferkopfes gegen den Anschlag führen kann, so dass die wenigstens eine Stützleiste hierdurch zumindest bereichsweise in Richtung der Greiferbasis geschwenkt wird, sodann in die Warteposition gelangt und über den Rastmechanismus in der Warteposition festgesetzt wird. Bei solchen Ausführungsformen kann es sein, dass an der Greiferbasis kein Aktuator zum Schwenken der wenigstens einen Stützleiste angeordnet ist. In anderen Worten kann ein Antrieb des Industrieroboters, welcher zur Bewegung des Greiferkopfes vorgesehen ist, auch zum Schwenken der wenigstens einen Stützleiste verwendet werden. Solche Ausführungsformen besitzen somit einen einfachen Aufbau.

Alternativ oder ergänzend hierzu kann vorgesehen sein, dass der Industrieroboter derart konfiguriert und ausgestattet ist, dass der Industrieroboter den mindestens einen Greiferkopf derart gegen den Anschlag bewegen kann, dass hierdurch der Rastmechanismus gelöst wird und die wenigstens eine Stützleiste aus der Warteposition in eine Arbeitsposition zurückschwenkt.

Es wäre auch denkbar, dass eine Bewegung der ersten Greiferleiste und/oder der zweiten Greiferleiste ein Schwenken der wenigstens einen Stützleiste bewirkt, indem die erste Greiferleiste und/oder die zweite Greiferleiste in eine Position verfahren wird, in der sie im normalen Betrieb nicht sind und hierdurch einen Mechanismus auslösen oder betätigen, der ein Schwenken der wenigstens einen Stützleiste in Richtung der Greiferbasis bewirkt.

Die Erfindung betrifft zudem ein Verfahren zum Erfassen und Manipulieren von Stückgütern über mindestens einen Greiferkopf nach mindestens einem Ausführungsbeispiel der vorhergehenden Beschreibung. Bei dem Verfahren werden Stückgüter über wenigstens eine Horizontalfördereinrichtung in einen Arbeitsbereich des mindestens einen Greiferkopfes bewegt. Weiter nimmt der mindestens eine Greiferkopf hierauf durch eine Zustellbewegung seiner ersten Greiferleiste und seiner zweiten Greiferleiste mindestens ein Stückgut klemmend entgegen und manipuliert das klemmend entgegengenommene mindestens eine Stückgut. Bei dem Verfahren ist vorgesehen, dass die wenigstens eine Stützleiste bedarfsweise über das wenigstens eine Gelenk zumindest bereichsweise in Richtung der Greiferbasis geschwenkt wird, so dass sich die wenigstens eine Stützleiste entweder zwischen mehreren gemeinsam klemmend entgegenzunehmenden Stückgütern befindet oder durch Verschwenken in eine Position gelangt, bei der sie ausschließlich oberhalb der jeweiligen klemmend entgegenzunehmenden Stückgütern angeordnet ist.

Bei dem Verfahren kann es sein, dass es sich bei den Stückgütern um Getränkebehältergebinde handelt. Ein solches Getränkebehältergebinde kann mehrere Getränkeflaschen und/oder mehrere Getränkedosen umfassen, die über mindestens ein Verpackungsmittel aneinandergehalten sind.

Es kann sein, dass der Greiferkopf genau eine Stützleiste für Stückgüter umfasst, die über ein Gelenk zumindest bereichsweise in Richtung der Greiferbasis schwenkbar ist. In weiteren Ausführungsformen kann der Greiferkopf wenigstens zwei Stützleisten für Stückgüter umfassen, die jeweils über ein Gelenk zumindest bereichsweise in Richtung der Greiferbasis schwenkbar sind.

Das vorherig erwähnte Dreh- und Verteilsystem kann wenigstens eine Horizontalfördereinrichtung umfassen, über welche Stückgüter in einen Arbeitsbereich des mindestens einen Greiferkopfes bewegbar sind. Das Dreh- und Verteilsystem kann zu einer solchen Handhabung des mindestens einen Greiferkopfes konfiguriert und ausgestattet sein, dass das mindestens eine Stückgut bei einer klemmenden Entgegennahme und Manipulation über den mindestens einen Greiferkopf einen Oberflächenkontakt zur wenigstens einen Horizontalfördereinrichtung beibehält.

Bei dem erfindungsgemäßen Verfahren kann es sein, dass das mindestens eine klemmend entgegengenommene Stückgut im Rahmen der Manipulation gedreht und/oder schräg zur Transportrichtung der wenigstens einen Horizontalfördereinrichtung versetzt wird. Hierbei kann es sein, dass ein Oberflächenkontakt zwischen dem jeweiligen mindestens einen klemmend entgegengenommenen Stückgut und der wenigstens einen Horizontalfördereinrichtung während der Manipulation durchgehend beibehalten wird.

Weiter kann es bei dem Verfahren sein, dass der mindestens eine Greiferkopf aus einer jeweiligen Vielzahl an Stückgütern eine jeweilige Anordnung bildet, welche jeweilige Anordnung auf eine aus der jeweiligen Vielzahl an Stückgütern zu bildende palettierfähige Lage abgestimmt ist, wobei der Greiferkopf zum Bilden der jeweiligen Anordnung mehrmals jeweils mindestens ein in seinen Arbeitsbereich bewegtes Stückgut klemmend entgegennimmt und manipuliert.

Die Anordnung kann derart ausgebildet sein, dass aus der Anordnung eine palettierfähige Lage gebildet werden kann, indem die Vielzahl an Stückgütern, welche die jeweilige Anordnung bilden, zusammengeschoben werden. Demnach kann die jeweilige Anordnung durch eine Vielzahl an Stückgütern gebildet sein, die durch Zusammenschieben in eine jeweilige palettierfähige Lage überführbar sind.

An dieser Stelle sei ergänzend betont, dass Merkmale, welche vorhergehend zu Ausführungsform des erfindungsgemäßen Greiferkopfes oder zu Ausführungsformen des erfindungsgemäßen Dreh- und Verteilsystems genannt wurden, gleichermaßen Teilaspekte des erfindungsgemäßen Verfahrens betreffen oder sein können. Wenn daher an einer Stelle bei der Beschreibung oder auch bei den Anspruchsdefinitionen von einer Ausführungsform des erfindungsgemäßen Greiferkopfes oder des erfindungsgemäßen Dreh- und Verteilsystems die Rede ist, so gilt dies gleichermaßen für die Ausführungsformen des erfindungsgemäßen Verfahrens. In umgekehrter Weise gilt dasselbe, so dass auch alle Aspekte und Ausführungsvarianten, die im Zusammenhang mit Ausführungsformen des erfindungsgemäßen Verfahrens erläutert wurden, gleichermaßen Teilaspekte des erfindungsgemäßen Greiferkopfes oder des erfindungsgemäßen Dreh- und Verteilsystems betreffen oder sein können. Wenn daher an einer Stelle bei der Beschreibung oder auch bei den Anspruchsdefinitionen zum Verfahren von bestimmten Aspekten oder Wirkungen die Rede ist, so gilt dies gleichermaßen für den erfindungsgemäßen Greiferkopf und das erfindungsgemäße Dreh- und Verteilsystem. Auch kann es sein, dass diverse Ausführungsformen des erfindungsgemäßen Verfahrens mittels einer Ausführungsform des erfindungsgemäßen Dreh- und Verteilsystems umgesetzt bzw. durchgeführt werden.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, der erfindungsgemäße Greiferkopf insbesondere Bestandteil eines erfindungsgemäße Dreh- und Verteilsystems sein, das zudem neben dem Greiferkopf eine Horizontalfördereinrichtung umfassen kann.

Über eine solche Horizontalfördereinrichtung können insbesondere Stückgüter, die als Getränkebehältergebinde ausgebildet sein können, in einen Arbeitsbereich des Greiferkopfes bewegt werden. Solche Getränkebehältergebinde können mehrere Getränkeflaschen oder mehrere Getränkedosen umfassen, die über ein Verpackungsmittel zusammengehalten sind. Bei dem Verpackungsmittel kann es sich beispielsweise um eine Umreifung handeln. Auch kann es sich bei dem Verpackungsmittel um einen flächigen und aus zellulosehaltigem Material gebildeten Verpackungszuschnitt handeln, in welchen die Getränkebehälter bzw. die Getränkeflaschen oder Getränkedosen eingesteckt sind. Darüber hinaus können die Getränkebehältergebinde mehrere Getränkebehälter umfassen, die über Klebeverbindungen miteinander verbunden sind. Auch weitere Verpackungsmittel und/oder Verbindungen sind denkbar, um Getränkebehälter solchermaßen zu einem Getränkebehältergebinde zusammenzufassen.

Der erfindungsgemäße Greiferkopf kann insbesondere eine erste Greiferleiste sowie eine zweite Greiferleiste umfassen. In der Praxis können die Greiferleisten beispielsweise durch Greiferbacken, durch zangenförmige Arme oder durch Bleche ausgebildet sein, die gegeneinander zustellbar sind. Auf einer jeweiligen Breitseitenfläche, welche den entgegenzunehmenden Stückgütern zugewandt ist, können die Greiferleisten jeweils eine Profilierung und/oder eine definierte Form aufweisen, die mit den jeweiligen entgegenzunehmenden Stückgütern korrespondiert, so dass die entgegenzunehmenden Stückgüter formschlüssig in die Greiferleisten eintauchen können, und/oder dass eine Haftreibung zwischen den Greiferleisten und den Stückgütern aufgrund der Profilierung erhöht wird. Hierdurch kann das Risiko reduziert werden, dass sich ein klemmend durch den Greiferkopf entgegengenommenes Stückgut bei einem Erfassen und/oder bei einer einer Manipulation durch den Greiferkopf ungewollt vom Greiferkopf löst.

Um die Stückgüter bzw. die Getränkebehältergebinde über die Greiferleisten klemmend zu erfassen, führen die Greiferleisten eine Zustellbewegung aus, bei welcher die Greiferleisten ihren relativen Abstand zueinander verkleinern und sich hierbei entlang der Greiferbasis, an der die Greiferleisten jeweils befestigt sind, in linearer Richtung sowie senkrecht zur Transportrichtung der Horizontalfördereinrichtung bewegen.

Bei einer Zustellbewegung der Greiferleisten werden die Stückgüter bzw. die Getränkebehältergebinde über die Greiferleisten somit zusammengeschoben, bis die Stückgüter bzw. die Getränkebehältergebinde an der Stützleiste des Greiferkopfes anschlagen. Bei der Stützleiste kann es sich bspw. um ein Trennblech handeln, welches an Stückgütern bzw. an Getränkebehältergebinden flächig anliegt, wenn die jeweiligen Stückgüter bzw. die jeweiligen Getränkebehältergebinde zwischen den Greiferleisten klemmend gehalten werden. Eine solche Stützleiste kann in der Praxis notwendig oder sinnvoll sein, um ein unbeabsichtigtes Lösen der Stückgüter vom Greiferkopf zu vermeiden, wenn die klemmend über den Greiferkopf gehaltenen Stückgüter über den Greiferkopf manipuliert werden.

Bei der erfindungsgemäßen Gestaltung des Greiferkopfes kann die Stützleiste insbesondere einen ersten Abschnitt und einen zweiten Abschnitt umfassen, wobei der erste Abschnitt am zweiten Abschnitt vorzugsweise über ein Gelenk angeordnet oder damit verbunden sein kann. Hierdurch kann der erste Abschnitt relativ zum zweiten Abschnitt gedreht werden, wobei der erste Abschnitt hierbei eine Schwenkbewegung ausführt und sich der Greiferbasis, wie dies nachfolgend noch beschrieben ist, annähert.

Das Trennblech bzw. die Stützleiste, welche vorzugsweise zwischen benachbarten Stückgütern angeordnet sein kann, sorgt sowohl für eine ausreichende Fixierung der Stückgüter am Greiferkopf und verhindert zudem, dass sich Stückgüter gegeneinander verschieben, wenn die Stückgüter über den Greiferkopf manipuliert werden. Sofern die Stückgüter als Getränkebehältergebinde ausgebildet sind, hat die Praxis gezeigt, dass Getränkebehälter eines ersten Getränkebehältergebindes zwischen mehrere Getränkebehälter eines benachbarten Getränkebehältergebindes eintauchen können, wenn benachbarte Stückgüter über Greiferleisten klemmend gehalten werden und eine Stützleiste fehlt.

Eine solche genestete Anordnung von Getränkebehältergebinden ist unerwünscht und eignet sich regelmäßig nicht für eine weitere Verarbeitung der über den Greiferkopf bereits manipulierten Getränkebehältergebinde. Zudem lösen sich Getränkebehältergebinde häufig vom Greiferkopf, wenn diese über den Greiferkopf erfasst wurden und sich hierbei in einer genesteten Anordnung befinden.

Eine Stützleiste ist somit immer dann für eine klemmende Entgegennahme von Stückgütern erforderlich, wenn mehrere senkrecht zur Transportrichtung der Horizontalfördereinrichtung benachbarte Stückgüter über den Greiferkopf gemeinsam klemmend erfasst werden sollen.

Der Greiferkopf steht vorzugsweise mit einer Steuerungseinrichtung in Verbindung, welche für die gesamte Steuerung der Greiferkopfbewegungen zum Zwecke des Erfassens und Manipulierens von Stückgütern bzw. von Gebinden verantwortlich ist. Nachdem der Greiferkopf Stückgüter klemmend entgegengenommen hat, werden die Stückgüter über den Greiferkopf manipuliert und hierbei typischerweise schräg zur Transportrichtung der Horizontalfördereinrichtung versetzt und/oder um eine lotrecht verlaufende Achse gedreht. Die Bewegung des Greiferkopfes auf Veranlassung der Steuerungseinrichtung erfolgt hierbei derart, dass sich mehrere Stückgüter nach einer Manipulation über den Greiferkopf in einer Anordnung befinden, die auf eine aus den jeweiligen mehreren Stückgütern zu bildende palettierfähige Lage abgestimmt ist.

Hierzu kann es notwendig sein, dass Stückgüter über den Greiferkopf gedreht werden, ohne dass im Rahmen der Manipulation ein Versatz dieser Stückgüter schräg zur Transportrichtung der Horizontalfördereinrichtung erfolgt. Auch kann es zum Bilden einer solchen Anordnung notwendig sein, dass Stückgüter über den Greiferkopf schräg zur Transportrichtung der Horizontalfördereinrichtung versetzt werden, ohne dass diese Stückgüter um eine lotrechte Achse gedreht werden.

Für einige Stückgüter kann es zum Bilden einer solchen Anordnung zudem notwendig sein, dass diese im Rahmen der Manipulation sowohl schräg zur Transportrichtung der Horizontalfördereinrichtung versetzt werden und zudem um eine lotrechte Achse gedreht werden. Sofern sich einzelne für die jeweilige Anordnung vorgesehene Stückgüter bereits in einer Position und Ausrichtung befinden, die sich für die jeweilige Anordnung eignet, können diese auch durch den Arbeitsbereich des Greiferkopfes bewegt werden, ohne dass der Greiferkopf diese einzelnen Stückgüter erfasst und manipuliert.

Eine Klemmkraft, die zum Halten der Stückgüter am Greiferkopf oder zwischen den Greiferleisten des Greiferkopfes erforderlich ist, wird über diese Greiferleisten selbst aufgebracht. Der Kraftschluss erfolgt dadurch, dass die Greiferleisten gemeinsam die zum Halten der Stückgüter notwendige Klemmkraft aufbringen und die Klemmkraft von einem der beiden Stückgüter über die Stützleiste auf das jeweilige weitere Stückgut eingeleitet wird.

Für die Stützleiste ist es in der Praxis sinnvoll, diese mit geringer Stärke auszuführen oder auszubilden, so dass ein einzelnes über den Greiferkopf entgegenzunehmendes Stückgut über eine Greiferleiste und eine Stützleiste nicht gegriffen werden könnte, ohne dass dies zu einer Beschädigung oder einer ungewollten Verformung der Stützleiste führt. Die Klemmkraft einer Greiferleiste bei Greiferköpfen, die aus dem Stand der Technik bekannt sind, zu groß, so dass die Stützleiste der Klemmkraft nicht standhalten kann. In der Praxis werden daher mehrere Greiferköpfe verwendet, wenn sowohl mehrere senkrecht zur Transportrichtung der Horizontalfördereinrichtung benachbarte Stückgüter als auch lediglich einzelne Stückgüter oder lediglich mehrere in Transportrichtung der Horizontalfördereinrichtung fluchtend hintereinander angeordnete Stückgüter manipuliert werden müssen, um eine entsprechende Anordnung aus einer Vielzahl an Stückgütern herzustellen, die auf eine palettierfähige Lage abgestimmt ist.

Der hier beschriebene erfindungsgemäße Greiferkopf kann hingegen eine Vielzahl an unterschiedlichen Manipulationsaufgaben durchführen und hierbei sowohl mehrere senkrecht zur Transportrichtung der Horizontalfördereinrichtung benachbarte Stückgüter entgegennehmen als auch einzelne Stückgüter erfassen. Das Dreh- und Verteilsystem, das mit einem solchen Greiferkopf ausgestattet ist, kann aus diesem Grunde einen sehr kompakten Aufbau besitzen, da kein weiterer Greiferkopf für die beschriebenen Manipulationsaufgaben benötigt wird. Zudem kann das Dreh- und Verteilsystem mit hohem Durchsatz arbeiten.

Wie schon zuvor erläutert, kann die die Stützleiste insbesondere einen ersten Abschnitt und einen zweiten Abschnitt umfassen, die über ein Gelenk miteinander verbunden sind. Hierdurch kann der erste Abschnitt aus einer Arbeitsposition in eine Warteposition geschwenkt werden, in welcher Warteposition der erste Abschnitt im Wesentlichen horizontal orientiert ist.

Wenn mehrere Stückgüter senkrecht zur Transportrichtung der Horizontalfördereinrichtung benachbart sind, kann sich die Stützleiste hierbei in der Arbeitsposition befinden, so dass die Stützleiste sich zwischen diesen senkrecht zur Transportrichtung der Horizontalfördereinrichtung benachbarten Stückgütern befindet, wenn diese Stückgüter durch eine Zustellbewegung der Greiferleisten klemmend erfasst werden.

Sofern lediglich ein Stückgut oder entlang lediglich einer Reihe über die Horizontalfördereinrichtung bewegte Stückgüter über den Greiferkopf entgegengenommen werden sollen, kann dem die Stützleiste entgegenstehen, wenn diese Stützleiste sich in der Arbeitsposition befindet. Bei einigen aus dem Stand der Technik bekannten Greiferköpfen wird die Stützleiste daher vom Greiferkopf abgenommen. Hierdurch besitzen bekannte Greiferköpfe eine geringe Flexibilität bei einer klemmenden Entgegennahme von Stückgütern. Zudem ist die Anpassung des Greiferkopfes an unterschiedliche Bereitstellungen von Stückgütern mit zeitlichem Aufwand verbunden.

Über das vorherig bereits erwähnte Gelenk ist der erste Abschnitt relativ zum zweiten Abschnitt drehbar und kann somit in Richtung nach oben bzw. in Richtung der Greiferbasis geschwenkt werden, wenn lediglich ein einzelnes Stückgut oder entlang lediglich einer Reihe über die Horizontalfördereinrichtung hintereinander bewegte Stückgüter mittels des Greiferkopfes erfasst werden sollen. In diversen Ausführungsformen kann eine solche Schwenkbewegung aktuatorisch bewirkt werden. Wenn das jeweilige einzelne Stückgut oder die entlang lediglich einer Reihe über die Horizontalfördereinrichtung hintereinander bewegten Stückgüter über die Greiferleisten klemmend erfasst werden sollen, ist die Stützleiste vorzugsweise vollständig oberhalb des einzelnen Stückgutes bzw. der entlang lediglich einer Reihe bewegten Stückgüter angeordnet, nämlich aus dem Kontaktbereich mit den Stückgütern nach oben geschwenkt.

Durch ein Drehen und/oder einen seitlichen Versatz gegenüber der Transportrichtung wird das klemmend erfasste Stückgut bzw. werden die Stückgüter der einen Reihe über den Greiferkopf sodann manipuliert. Die Stützleiste verbleibt auch hierbei in ihrer Warteposition, wie zuvor beschrieben.

Nachdem das einzelne Stückgut bzw. die Stückgüter der einen Reihe über den Greiferkopf manipuliert wurden, wird die bis dahin ausgebildete klemmende Verbindung zwischen dem einzelnen Stückgut bzw. den Stückgütern der einen Reihe und den Greiferleisten aufgehoben, wozu die Greiferleisten auseinanderbewegt werden und somit ihren relativen Abstand zueinander vergrößern. Wenn die Stützleiste zur Anlage an benachbarten Stückgütern wieder benötigt wird, kann die Stützleiste aus der Warteposition in die Arbeitsposition zurückgeschwenkt werden. Ein solcher Schwenkvorgang kann weiterhin aktuatorisch bewirkt werden. Auch ist es denkbar, dass ein Rastmechanismus gelöst wird und der erste Abschnitt selbständig aus der Warteposition in die Arbeitsposition zurückschwenkt.

Über den zweiten Abschnitt steht die Stützleiste zudem mit einer Linearführung in Verbindung, welche Linearführung an der Greiferbasis angeordnet ist. Hierdurch kann die Stützleiste entlang der Transportrichtung der Horizontalfördereinrichtung relativ zur Greiferbasis verschoben werden.

Nachfolgend sollen noch in knapper Form aufeinanderfolgende Schritte erläutert werden, die zur Durchführung des erfindungsgemäßen Verfahrens vorgesehen sein können. So kann in einem ersten Schritt eine Stützleiste eines Greiferkopfes über ein Gelenk in Richtung einer Greiferbasis geschwenkt werden, wodurch sie in eine Warteposition gelangt. In dieser Warteposition verbleibt die Stützleiste auch während der nachfolgenden Schritte.

Im nächsten Schritt oder zweiten Schritt wird der Greiferkopf in Richtung eines einzelnen klemmend entgegenzunehmenden Stückgutes abgesenkt, so dass sich das einzelne klemmend entgegenzunehmende Stückgut zwischen Greiferleisten des Greiferkopfes befindet.

Im nächstfolgenden oder dritten Schritt, welcher auf den zweiten Schritt folgt, führen Greiferleisten des Greiferkopfes eine Zustellbewegung aus, wodurch das einzelne Stückgut klemmend entgegengenommen wird.

In einem weiteren folgenden Schritt oder vierten Schritt wird das klemmend entgegengenommene Stückgut über den Greiferkopf manipuliert und hierbei gedreht und/oder schräg zur Transportrichtung einer Horizontalfördereinrichtung, auf welchem das einzelne Stückgut aufsteht, versetzt. Die Manipulation erfolgt hierbei, um aus dem einzelnen Stückgut und weiteren Stückgütern eine Anordnung zu bilden, die auf eine aus dem einzelnen Stückgut und den weiteren Stückgütern, d.h. insbesondere den in vorangegangenen Manipulationsschritten bewegten und manipulierten Stückgütern, herzustellende palettierfähige Lage abgestimmt ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1 und 2 zeigen schematische Ansichten einer Ausführungsform eines erfindungsgemäßen Greiferkopfes und einer ersten Ausführungsform eines erfindungsgemäßen Dreh- und Verteilsystems.
Fig. 3 zeigt im Flussdiagramm Schritte, wie sie einzeln oder gemäß der dargestellten Kombination in diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

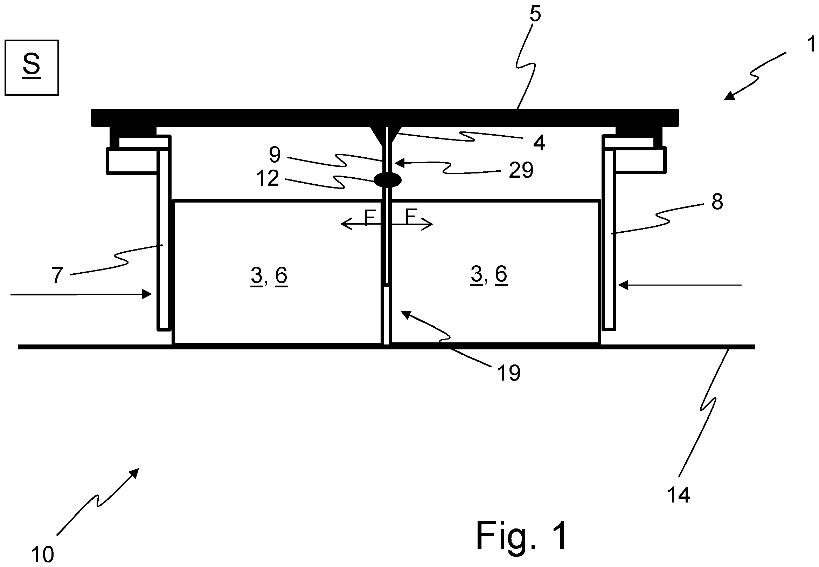

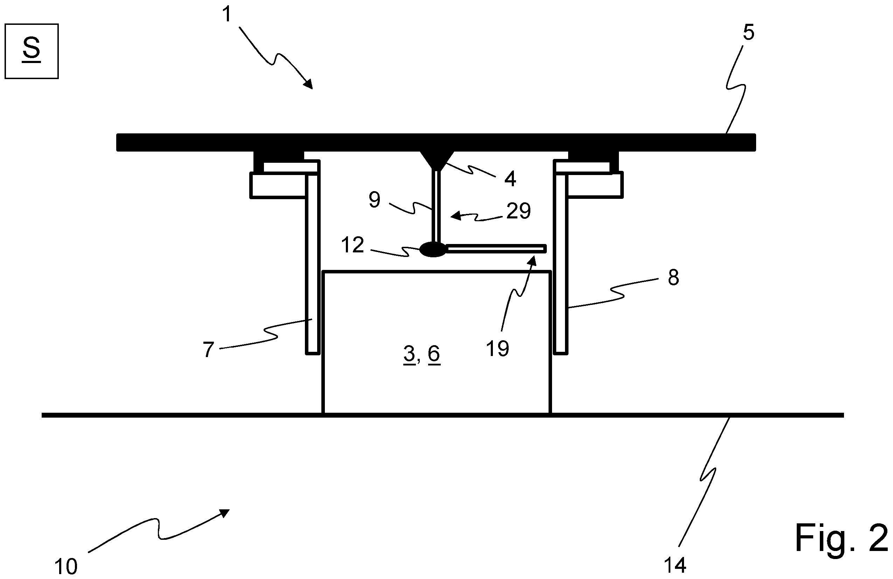

Die Figuren 1 und 2 zeigen schematische Ansichten einer ersten Ausführungsform eines erfindungsgemäßen Greiferkopfes 1 und einer ersten Ausführungsform eines erfindungsgemäßen Dreh- und Verteilsystems 10.

Das Dreh- und Verteilsystem 10 umfasst in der Ausführungsform nach Figuren 1 und 2 den Greiferkopf 1 und eine Horizontalfördereinrichtung 14. Über die Horizontalfördereinrichtung 14 werden in Fig. 1 Stückgüter 3, die als Getränkebehältergebinde 6 ausgebildet sind, in einen Arbeitsbereich des Greiferkopfes 1 bewegt. Solche Getränkebehältergebinde 6 können mehrere Getränkeflaschen oder mehrere Getränkedosen umfassen, die über ein Verpackungsmittel zusammengehalten sind. Bei dem Verpackungsmittel kann es sich beispielsweise um eine Umreifung handeln. Auch kann es sich bei dem Verpackungsmittel um einen flächigen und aus cellulosehaltigem Material gebildeten Verpackungszuschnitt handeln, in welchen die Getränkebehälter bzw. die Getränkeflaschen oder Getränkedosen eingesteckt sind. Darüber hinaus können die Getränkebehältergebinde 6 mehrere Getränkebehälter umfassen, die über Klebeverbindungen miteinander verbunden sind. Auch weitere Verpackungsmittel und/oder Verbindungen sind denkbar, um Getränkebehälter solchermaßen zu einem Getränkebehältergebinde 6 zusammenzufassen.

In Fig. 1 ist die Transportrichtung der Horizontalfördereinrichtung 14 in Richtung der Bildebene orientiert. Vorliegend werden weitere Stückgüter 3 in Richtung der Bildebene transportiert, die mit den beiden Stückgütern 3 fluchten, welche in Fig. 1 zu erkennen sind. Da diese weiteren Stückgüter 3 von den beiden Stückgütern 3 verdeckt werden, sind sie in Fig. 1 nicht zu erkennen. Die beiden in Fig. 1 dargestellten Stückgüter 3 sind senkrecht zur Transportrichtung der Horizontalfördereinrichtung 14 nebeneinander angeordnet.

Der Greiferkopf 1 umfasst eine erste Greiferleiste 7 und eine zweite Greiferleiste 8, die in Fig. 1 lediglich schematisch dargestellt wurden. In der Praxis können die Greiferleisten 7 und 8 beispielsweise durch Greiferbacken, durch zangenförmige Arme oder durch Bleche ausgebildet sein. Auf einer jeweiligen Breitseitenfläche, welche den entgegenzunehmenden Stückgütern 3 zugewandt ist, können die Greiferleisten 7 und 8 jeweils eine Profilierung und/oder eine definierte Form aufweisen, die mit den jeweiligen entgegenzunehmenden Stückgütern 3 korrespondiert, so dass die entgegenzunehmenden Stückgüter 3 formschlüssig in die Greiferleisten 7 und 8 eintauchen und/oder so dass eine Haftreibung zwischen den Greiferleisten 7 und 8 und den Stückgütern 3 aufgrund der Profilierung erhöht wird. Hierdurch kann das Risiko reduziert werden, dass sich ein klemmend durch den Greiferkopf 1 entgegengenommenes Stückgut 3 bei einer Manipulation durch den Greiferkopf 1 ungewollt vom Greiferkopf 1 löst.

Um die Stückgüter 3 bzw. die Getränkebehältergebinde 6 über die Greiferleisten 7 und 8 klemmend zu erfassen, führen die Greiferleisten 7 und 8 eine Zustellbewegung aus, bei welcher die Greiferleisten 7 und 8 ihren relativen Abstand zueinander verkleinern und sich hierbei entlang der Greiferbasis 5, an der die Greiferleisten 7 und 8 jeweils befestigt sind, in linearer Richtung sowie senkrecht zur Transportrichtung der Horizontalfördereinrichtung 14 bewegen. Die Bewegung ist in Fig. 1 mittels Pfeildarstellung angedeutet.

Bei einer Zustellbewegung der Greiferleisten 7 und 8 werden die Stückgüter 3 bzw. die Getränkebehältergebinde 6 über die Greiferleisten 7 und 8 somit zusammengeschoben, bis die Stückgüter 3 bzw. die Getränkebehältergebinde 6 an der Stützleiste 9 des Greiferkopfes 1 anschlagen. Bei der Stützleiste 9 handelt es sich um ein Trennblech, welches an Stückgütern 3 bzw. an Getränkebehältergebinden 6 flächig anliegt, wenn die jeweiligen Stückgüter 3 bzw. die jeweiligen Getränkebehältergebinde 6 zwischen den Greiferleisten 7 und 8 klemmend gehalten werden. Eine solche Stützleiste 9 ist in der Praxis notwendig oder sinnvoll, um ein unbeabsichtigtes Lösen der Stückgüter 3 vom Greiferkopf 1 zu vermeiden, wenn die klemmend über den Greiferkopf 1 gehaltenen Stückgüter 3 über den Greiferkopf 1 manipuliert werden. Vorliegend umfasst die Stützleiste einen ersten Abschnitt 19 und einen zweiten Abschnitt 29, wobei der erste Abschnitt 19 am zweiten Abschnitt 29 über ein Gelenk 12 angeordnet ist. Hierdurch kann der erste Abschnitt 19 relativ zum zweiten Abschnitt 29 gedreht werden, wobei der erste Abschnitt 19 hierbei eine Schwenkbewegung ausführt und sich der Greiferbasis 5, wie dies nachfolgend noch beschrieben ist, annähert.

Das Trennblech bzw. die Stützleiste 9, welche zwischen benachbarten Stückgütern 3 angeordnet ist, sorgt sowohl für eine ausreichende Fixierung der Stückgüter 3 am Greiferkopf 1 und verhindert zudem, dass sich Stückgüter 3 gegeneinander verschieben, wenn die Stückgüter 3 über den Greiferkopf 1 manipuliert werden. Sofern die Stückgüter 3 als Getränkebehältergebinde 6 ausgebildet sind, hat die Praxis gezeigt, dass Getränkebehälter eines ersten Getränkebehältergebindes 6 zwischen mehrere Getränkebehälter eines benachbarten Getränkebehältergebindes 6 eintauchen können, wenn benachbarte Stückgüter 3 über Greiferleisten 7 und 8 klemmend gehalten werden und eine Stützleiste 9 fehlt.

Eine solche genestete Anordnung von Getränkebehältergebinden 6 ist unerwünscht und eignet sich regelmäßig nicht für eine weitere Verarbeitung der über den Greiferkopf 1 bereits manipulierten Getränkebehältergebinde 6. Zudem lösen sich Getränkebehältergebinde 6 häufig vom Greiferkopf 1, wenn diese über den Greiferkopf 1 erfasst wurden und sich hierbei in einer genesteten Anordnung befinden.

Eine Stützleiste 9 ist somit immer dann für eine klemmende Entgegennahme von Stückgütern 3 erforderlich, wenn mehrere senkrecht zur Transportrichtung der Horizontalfördereinrichtung 14 benachbarte Stückgüter 3 über den Greiferkopf 1 gemeinsam klemmend erfasst werden sollen.

Der Greiferkopf 1 steht mit der Steuerungseinrichtung S in Verbindung. Nachdem der Greiferkopf 1 Stückgüter 3 klemmend entgegengenommen hat, werden die Stückgüter 3 über den Greiferkopf 1 manipuliert und hierbei schräg zur Transportrichtung der Horizontalfördereinrichtung versetzt und/oder um eine lotrecht verlaufende Achse gedreht. Die Bewegung des Greiferkopfes 1 auf Veranlassung der Steuerungseinrichtung S erfolgt hierbei derart, dass sich mehrere Stückgüter 3 nach einer Manipulation über den Greiferkopf 1 in einer Anordnung befinden, die auf eine aus den jeweiligen mehreren Stückgütern 3 zu bildende palettierfähige Lage abgestimmt ist.

Hierzu kann es notwendig sein, dass Stückgüter 3 über den Greiferkopf 1 gedreht werden, ohne dass im Rahmen der Manipulation ein Versatz dieser Stückgüter 3 schräg zur Transportrichtung der Horizontalfördereinrichtung 14 erfolgt. Auch kann es zum Bilden einer solchen Anordnung notwendig sein, dass Stückgüter 3 über den Greiferkopf 1 schräg zur Transportrichtung der Horizontalfördereinrichtung 14 versetzt werden, ohne dass diese Stückgüter 3 um eine lotrechte Achse gedreht werden.

Für einige Stückgüter 3 kann es zum Bilden einer solchen Anordnung zudem notwendig sein, dass diese im Rahmen der Manipulation sowohl schräg zur Transportrichtung der Horizontalfördereinrichtung 14 versetzt werden und zudem um eine lotrechte Achse gedreht werden. Sofern sich einzelne für die jeweilige Anordnung vorgesehene Stückgüter 3 bereits in einer Position und Ausrichtung befinden, die sich für die jeweilige Anordnung eignet, können diese auch durch den Arbeitsbereich des Greiferkopfes 1 bewegt werden, ohne dass der Greiferkopf 1 diese einzelnen Stückgüter 3 erfasst und manipuliert.

Wie es aus Fig. 1 hervorgeht, wird über die Greiferleisten 7 und 8 die zum Halten der Stückgüter 3 am Greiferkopf 1 notwendige Klemmkraft aufgebracht. Der Kraftschluss erfolgt somit, indem die Greiferleisten 7 und 8 gemeinsam die zum Halten der Stückgüter 3 notwendige Klemmkraft aufbringen und die Klemmkraft von einem der beiden Stückgüter 3 über die Stützleiste 9 auf das jeweilige weitere Stückgut 3 eingeleitet wird. In Fig. 1 ist die Klemmkraft mittels Pfeildarstellung F angedeutet.

Die Stützleiste 9 muss in der Praxis mit geringer Stärke ausgeführt werden, so dass ein einzelnes über den Greiferkopf 1 entgegenzunehmendes Stückgut 3 über eine Greiferleiste 7 bzw. 8 und eine Stützleiste 9 nicht gegriffen werden könnte, ohne dass dies zu einer Beschädigung oder einer ungewollten Verformung der Stützleiste 9 führt. Die Klemmkraft einer Greiferleiste 7 bzw. 8 ist bei Greiferköpfen, die aus dem Stand der Technik bekannt sind zu groß, so dass die Stützleiste 9 der Klemmkraft nicht standhalten kann. In der Praxis werden daher mehrere Greiferköpfe verwendet, wenn sowohl mehrere senkrecht zur Transportrichtung der Horizontalfördereinrichtung 14 benachbarte Stückgüter 3 als auch lediglich einzelne Stückgüter 3 oder lediglich mehrere in Transportrichtung der Horizontalfördereinrichtung 14 fluchtend hintereinander angeordnete Stückgüter 3 manipuliert werden müssen, um eine entsprechende Anordnung aus einer Vielzahl an Stückgütern 3 herzustellen, die auf eine palettierfähige Lage abgestimmt ist.

Der Greiferkopf 1 des Ausführungsbeispiels nach Figuren 1 und 2 kann hingegen eine Vielzahl an unterschiedlichen Manipulationsaufgaben durchführen und hierbei sowohl mehrere senkrecht zur Transportrichtung der Horizontalfördereinrichtung 14 benachbarte Stückgüter 3 entgegennehmen als auch einzelne Stückgüter 3 erfassen. Das Dreh- und Verteilsystem 10 kann aus diesem Grunde einen sehr kompakten Aufbau besitzen, da kein weiterer Greiferkopf 1 für die beschriebenen Manipulationsaufgaben benötigt wird. Zudem kann das Dreh- und Verteilsystem 10 mit hohem Durchsatz arbeiten.

Wie es aus einer Zusammenschau der Fig. 1 mit Fig. 2 hervorgeht und vorhergehend bereits erwähnt wurde, umfasst die Stützleiste 9 einen ersten Abschnitt 19 und einen zweiten Abschnitt 29, die über ein Gelenk 12 miteinander verbunden sind. Hierdurch kann der erste Abschnitt 19 aus der Arbeitsposition nach Fig. 1 in eine Warteposition nach Fig. 2 geschwenkt werden, in welcher Warteposition der erste Abschnitt 19 im Wesentlichen horizontal orientiert ist.

Wenn mehrere Stückgüter 3 senkrecht zur Transportrichtung der Horizontalfördereinrichtung 14 benachbart sind, kann sich die Stützleiste 9 hierbei in der Arbeitsposition nach Fig. 1 befinden, so dass die Stützleiste 9 sich zwischen diesen senkrecht zur Transportrichtung der Horizontalfördereinrichtung 14 benachbarten Stückgütern 3 befindet, wenn diese Stückgüter 3 durch eine Zustellbewegung der Greiferleisten 7 und 8 klemmend erfasst werden.

Sofern lediglich ein Stückgut 3 oder entlang lediglich einer Reihe über die Horizontalfördereinrichtung 14 bewegte Stückgüter 3 über den Greiferkopf 1 entgegengenommen werden sollen, ist dies mittels des Greiferkopfes 1 nicht möglich, wenn die Stützleiste 9 die in Fig. 1 dargestellte Arbeitsposition einnimmt. Bei aus dem Stand der Technik bekannten Greiferköpfen wird die Stützleiste 9 daher vom Greiferkopf abgenommen. Hierdurch besitzen bekannte Greiferköpfe eine geringe Flexibilität bei einer klemmenden Entgegennahme von Stückgütern 3. Zudem ist die Anpassung des Greiferkopfes 1 an unterschiedliche Bereitstellungen von Stückgütern 3 mit zeitlichem Aufwand verbunden.

Über das vorherig bereits erwähnte Gelenk 12 ist der erste Abschnitt 19 relativ zum zweiten Abschnitt 29 drehbar und kann somit in Richtung nach oben bzw. in Richtung der Greiferbasis 5 geschwenkt werden, wenn lediglich ein einzelnes Stückgut 3 oder entlang lediglich einer Reihe über die Horizontalfördereinrichtung 14 hintereinander bewegte Stückgüter 3 mittels des Greiferkopfes 1 erfasst werden sollen. In diversen Ausführungsformen kann eine solche Schwenkbewegung aktuatorisch bewirkt werden. Wenn das jeweilige einzelne Stückgut 3 oder die entlang lediglich einer Reihe über die Horizontalfördereinrichtung 14 hintereinander bewegten Stückgüter 3 über die Greiferleisten 7 und 8 klemmend erfasst werden, ist die Stützleiste 9 vollständig oberhalb des einzelnen Stückgutes 3 bzw. der entlang lediglich einer Reihe bewegten Stückgüter 3 angeordnet, wie dies durch Fig. 2 verdeutlicht wird.

Durch ein Drehen und/oder einen seitlichen Versatz gegenüber der Transportrichtung wird das klemmend erfasste Stückgut 3 bzw. werden die Stückgüter 3 der einen Reihe über den Greiferkopf 1 sodann manipuliert. Die Stützleiste 9 verbleibt auch hierbei in ihrer Warteposition nach Fig. 2.

Nachdem das einzelne Stückgut 3 bzw. die Stückgüter 3 der einen Reihe über den Greiferkopf 1 manipuliert wurden, wird die bis dahin ausgebildete klemmende Verbindung zwischen dem einzelnen Stückgut 3 bzw. den Stückgütern 3 der einen Reihe und den Greiferleisten 7 und 8 aufgehoben, wozu die Greiferleisten 7 und 8 auseinanderbewegt werden und ihren relativen Abstand zueinander vergrößern. Wenn die Stützleiste 9 zur Anlage an benachbarten Stückgütern 3 wieder benötigt wird, kann die Stützleiste 9 aus der Warteposition nach Fig. 2 in die Arbeitsposition nach Fig. 1 zurückgeschwenkt werden. Ein solcher Schwenkvorgang kann weiterhin aktuatorisch bewirkt werden. Auch ist es denkbar, dass ein Rastmechanismus gelöst wird und der erste Abschnitt 19 selbständig aus der Warteposition nach Fig. 2 in die Arbeitsposition nach Fig. 1 zurückschwenkt.

Über den zweiten Abschnitt 29 steht die Stützleiste 9 zudem mit einer Linearführung 4 in Verbindung, welche Linearführung 4 an der Greiferbasis 5 angeordnet ist. Hierdurch kann die Stützleiste 9 entlang der Transportrichtung der Horizontalfördereinrichtung 14 relativ zur Greiferbasis 5 verschoben werden.

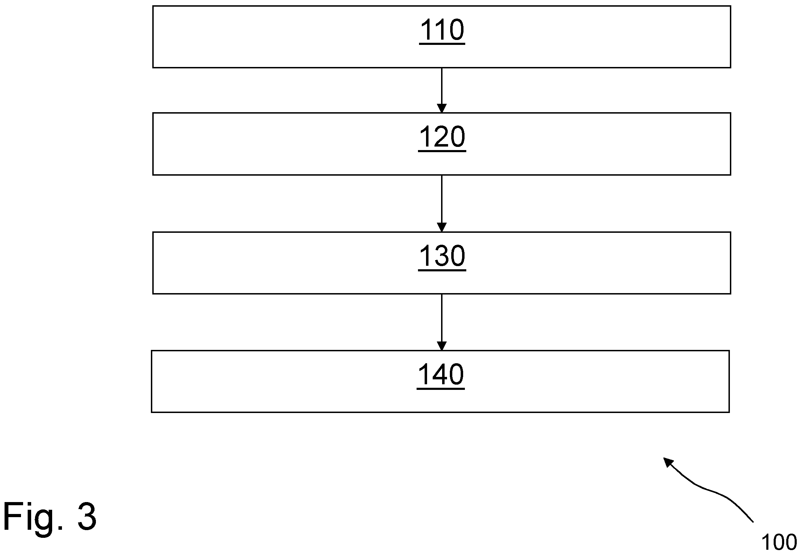

Die Fig. 3 zeigt im Flussdiagramm Schritte, wie sie einzeln oder gemäß der in Fig. 3 dargestellten Kombination in diversen Ausführungsformen des erfindungsgemäßen Verfahrens 100 vorgesehen sein können.

Im Schritt 110 wird eine Stützleiste 9 eines Greiferkopfes 1 über ein Gelenk 12 in Richtung einer Greiferbasis 5 geschwenkt und gelangt hierdurch in eine Warteposition, wie sie beispielhaft in Fig. 2 dargestellt ist. In dieser Warteposition verbleibt die Stützleiste 9 auch während der nachfolgenden Schritte 120 bis 140.

Im Schritt 120 wird der Greiferkopf 1 in Richtung eines einzelnen klemmend entgegenzunehmenden Stückgutes 3 abgesenkt, so dass sich das einzelne klemmend entgegenzunehmende Stückgut 3 zwischen Greiferleisten 7 und 8 des Greiferkopfes 1 befindet.

Im Schritt 130, welcher auf den Schritt 120 folgt, führen Greiferleisten 7 und 8 des Greiferkopfes 1 eine Zustellbewegung aus, wodurch das einzelne Stückgut 3 klemmend entgegengenommen wird.

Im Schritt 140 wird das klemmend entgegengenommene Stückgut 3 über den Greiferkopf 1 manipuliert und hierbei gedreht und/oder schräg zur Transportrichtung einer Horizontalfördereinrichtung 14, auf welchem das einzelne Stückgut 3 aufsteht, versetzt. Die Manipulation erfolgt hierbei, um aus dem einzelnen Stückgut 3 und weiteren Stückgütern 3 eine Anordnung zu bilden, die auf eine aus dem einzelnen Stückgut 3 und den weiteren Stückgütern 3 herzustellende palettierfähige Lage abgestimmt ist.

### Bezugszeichenliste

- 1: Greiferkopf
- 3: Stückgut
- 4: Linearführung
- 5: Greiferbasis
- 6: Getränkebehältergebinde
- 7: Greiferleiste
- 8: Greiferleiste
- 9: Stützleiste
- 10: Dreh- und Verteilsystem
- 12: Gelenk
- 14: Horizontalfördereinrichtung
- 19: Erster Abschnitt
- 29: Zweiter Abschnitt

- 100: Verfahren
- 110: Erster Verfahrensschritt
- 120: Zweiter Verfahrensschritt
- 130: Dritter Verfahrensschritt
- 140: Vierter Verfahrensschritt

- S: Steuerungseinrichtung

## Patentansprüche

1. Greiferkopf (1) zum Erfassen von Stückgütern (3), aufweisend
- eine erste Greiferleiste (7) und eine zweite Greiferleiste (8), die eine Zustellbewegung zur klemmenden Entgegennahme mindestens eines Stückgutes (3) ausführen können und an einer Greiferbasis (5) des Greiferkopfes (1) befestigt sind und
- wenigstens eine Stützleiste (9) für Stückgüter (3), die sich zwischen der ersten Greiferleiste (7) und der zweiten Greiferleiste (8) befindet und an der Greiferbasis (5) gehalten wird, **dadurch gekennzeichnet, dass** der Greiferkopf (1) wenigstens ein Gelenk (12) umfasst, über das die wenigstens eine Stützleiste (9) zumindest bereichsweise in Richtung der Greiferbasis (5) schwenkbar ist.

2. Greiferkopf (1) nach Anspruch 1, wobei die gesamte wenigstens eine Stützleiste (9) über das wenigstens eine Gelenk (12) in Richtung der Greiferbasis (5) schwenkbar ist.

3. Greiferkopf (1) nach Anspruch 1, wobei die wenigstens eine Stützleiste (9) aus mindestens zwei Abschnitten (19, 29) gebildet ist, die über das wenigstens eine Gelenk (12) drehbar miteinander verbunden sind, so dass ein Abschnitt (19, 29) oder mehrere Abschnitte (19, 29) einer jeweiligen Stützleiste (9) durch eine Drehbewegung in Richtung der Greiferbasis (5) schwenkbar sind.

4. Greiferkopf (1) nach einem der Ansprüche 1 bis 3, umfassend mindestens einen an der Greiferbasis (5) angeordneten Aktuator, der die wenigstens eine Stützleiste (9) mit einer Stellbewegung betätigen kann, bei der die wenigstens eine Stützleiste (9) zumindest bereichsweise in Richtung der Greiferbasis (5) schwenkt.

5. Greiferkopf (1) nach einem der Ansprüche 1 bis 4, bei welchem eine jeweilige lineare Schwenkachse des jeweiligen mindestens einen Gelenkes (12) eine solche Ausrichtung besitzt, bei der die jeweilige lineare Schwenkachse im Wesentlichen horizontal orientiert ist, wenn das jeweilige mindestens eine Stückgut (3) im Rahmen einer jeweiligen Zustellbewegung der ersten Greiferleiste (7) und der zweiten Greiferleiste (8) klemmend entgegengenommen wird.

6. Greiferkopf (1) nach einem der Ansprüche 1 bis 5, bei dem die wenigstens eine Stützleiste (9) über mindestens eine Linearführung (4) an der Greiferbasis (5) gehalten wird.

7. Greiferkopf (1) nach einem der Ansprüche 1 bis 6, bei dem die wenigstens eine Stützleiste (9) durch die erste Greiferleiste (7) und/oder durch die zweite Greiferleiste (8) mit einer Stellbewegung betätigbar ist, bei der die wenigstens eine Stützleiste (9) zumindest bereichsweise in Richtung der Greiferbasis (5) schwenkt.

8. Greiferkopf (1) nach einem der Ansprüche 1 bis 7, umfassend einen Rastmechanismus, über den die wenigstens eine Stützleiste (9) in einer Warteposition festsetzbar ist, in welcher Warteposition die wenigstens eine Stützleiste (9) zumindest bereichsweise in Richtung der Greiferbasis (5) geschwenkt ist.

9. Greiferkopf (1) nach einem der Ansprüche 1 bis 8, bei dem die erste Greiferleiste (7) und/oder die zweite Greiferleiste (8) einen Durchbruch ausbilden, durch den die wenigstens eine Stützleiste (9) hindurchtreten kann, wenn die wenigstens eine Stützleiste (9) zumindest bereichsweise in Richtung der Greiferbasis (5) geschwenkt ist.

10. Greiferkopf (1) nach einem der Ansprüche 1 bis 9, der zum Erfassen von Stückgütern (3) ausgebildet ist, wobei es sich bei den Stückgütern (3) jeweils um Getränkebehältergebinde (6) handelt.

11. Dreh- und Verteilsystem (10) für Stückgüter (3) mit mindestens einem Greiferkopf (1) nach einem der Ansprüche 1 bis 10.

12. Dreh- und Verteilsystem (10) nach Anspruch 11, mit mindestens einem Industrieroboter, an dem der mindestens eine Greiferkopf (1) angeordnet ist, wobei es sich bei dem mindestens einen Industrieroboter um einen Portalroboter und/oder um einen Deltakinematik-Roboter handelt.

13. Dreh- und Verteilsystem (10) nach Anspruch 11 oder 12, konfiguriert und ausgestattet zum Bilden einer Anordnung aus einer Vielzahl an Stückgütern (3), welche Anordnung auf eine aus der Vielzahl an Stückgütern (3) zu bildende palettierfähige Lage abgestimmt ist.

14. Verfahren (100) zum Erfassen und Manipulieren von Stückgütern (3) über mindestens einen Greiferkopf (1) nach einem der Ansprüche 1 bis 10, bei welchem Verfahren (100) Stückgüter (3) über wenigstens eine Horizontalfördereinrichtung (14) in einen Arbeitsbereich des mindestens einen Greiferkopfes (1) bewegt werden und der mindestens eine Greiferkopf (1) hierauf durch eine Zustellbewegung seiner ersten Greiferleiste (7) und seiner zweiten Greiferleiste (8) mindestens ein Stückgut (3) klemmend entgegennimmt und das klemmend entgegengenommene mindestens eine Stückgut (3) manipuliert und bei welchem Verfahren (100) vorgesehen ist, dass die wenigstens eine Stützleiste (9) bedarfsweise über das wenigstens eine Gelenk (12) zumindest bereichsweise in Richtung der Greiferbasis (5) geschwenkt wird, so dass sich die wenigstens eine Stützleiste (9) entweder zwischen mehreren gemeinsam klemmend entgegenzunehmenden Stückgütern (3) befindet oder durch Verschwenken in eine Position gelangt, bei der sie ausschließlich oberhalb der jeweiligen klemmend entgegenzunehmenden Stückgüter (3) angeordnet ist.

15. Verfahren (100) nach Anspruch 14, bei dem es sich bei den Stückgütern (3) um Getränkebehältergebinde (6) handelt.
